# FASCICULE DE BREVET EUROPEEN

(11) **EP 2 411 686 B1**
(45) Date de publication et mention de la délivrance du brevet: **10.12.2014**
(21) Numéro de dépôt: 10715310.8
(22) Date de dépôt: 09.03.2010
(51) Int. Cl.: F16C 7/06, F16C 7/04, F02K 1/12, F02K 1/70, F02K 1/72

(54) **BIELLE COUDEE EQUIPEE D'AU MOINS UN MOYEN D'AUTO-ALIGNEMENT**
MIT MINDESTENS EINEM SELBSTAUSRICHTUNGSMITTEL AUSGESTATTETE GEBOGENE VERBINDUNGSSTANGE
BENT CONNECTING ROD FITTED WITH AT LEAST ONE SELF-ALIGNING MEANS

(30) Priorité: 27.03.2009 FR 0901496
(43) Date de publication de la demande: 01.02.2012
(73) Titulaire: Aircelle, 76700 Gonfreville l'Orcher (FR)
(72) Inventeur: VAUCHEL, Guy, Bernard, F-76700 Harfleur (FR); SEGAT, Peter, F-76600 Le Havre (FR); BAILLARD, André, F-76110 Bretteville Du Grand Caux (FR); BOURET, Georges, Alain, F-76133 Epouville (FR)
(74) Mandataire: Gaillarde, Frédéric F. Ch.
(86) Numéro de dépôt international: PCT/FR2010/050398
(87) Numéro de publication internationale: WO 2010/109109

(56) Documents cités:
- FR-A1- 2 379 705
- GB-A- 1 421 153

## Description

La présente invention concerne une bielle coudée destinée à relier un premier ensemble à un second ensemble mobiles l'un par rapport à l'autre, équipée d'au moins un moyen d'auto-alignement.

Il s'agit notamment d'ensembles utilisés dans le domaine de l'aéronautique, et en particulier de la section aval d'une tuyère secondaire de nacelle d'aéronef et de la structure interne fixe de cette nacelle.

Une nacelle d'aéronef présente généralement une structure tubulaire comprenant une entrée d'air en amont du turboréacteur, une section médiane destinée à entourer une soufflante du turboréacteur, une section aval abritant des moyens d'inversion de poussée et destinée à entourer la chambre de combustion du turboréacteur, et est généralement terminée par une tuyère d'éjection dont la sortie est située en aval du turboréacteur.

Les nacelles modernes sont destinées à abriter un turboréacteur double flux apte à engendrer par l'intermédiaire des pales de la soufflante en rotation un flux d'air chaud (également appelé flux primaire) issu de la chambre de combustion du turboréacteur, et un flux d'air froid (flux secondaire) qui circule à l'extérieur du turboréacteur à travers un passage annulaire, également appelé veine, formé entre un carénage du turboréacteur, souvent dénommé structure interne fixe, et une paroi interne de la nacelle. Les deux flux d'air sont éjectés du turboréacteur par l'arrière de la nacelle.

La section arrière de la nacelle présente la tuyère d'éjection visant à canaliser l'éjection des flux d'air. Cette tuyère peut venir en complément d'une tuyère primaire canalisant le flux chaud et est alors appelée tuyère secondaire.

Le rôle d'un inverseur de poussée est, lors de l'atterrissage d'un avion, d'améliorer la capacité de freinage de celui-ci en redirigeant vers l'avant au moins une partie de la poussée générée par le turboréacteur. Dans cette phase, l'inverseur obstrue la veine du flux froid et dirige ce dernier vers l'avant de la nacelle, engendrant de ce fait une contre-poussée qui vient s'ajouter au freinage des roues de l'avion.

Les moyens mis en oeuvre pour réaliser cette réorientation du flux froid varient suivant le type d'inverseur. Cependant, dans tous les cas, la structure d'un inverseur comprend des éléments mobiles déplaçables entre, d'une part, une position déployée dans laquelle ils ouvrent dans la nacelle un passage destiné au flux dévié, et d'autre part, une position d'escamotage dans laquelle ils ferment ce passage. Ces éléments mobiles peuvent remplir une fonction de déviation ou simplement d'activation d'autres moyens de déviation.

Par ailleurs, pour transformer un déplacement globalement rectiligne en un mouvement essentiellement en rotation en transmettant des forces imprimées sur les éléments mobiles vers d'autres, on a couramment recours à un système de bielles.

A cette fin, il est connu de l'état de la technique d'utiliser des bielles droites composées principalement d'une tige métallique joignant deux articulations d'axes mobiles reliés aux éléments mobiles comme illustré dans la publication GB 1421153. De telles bielles droites sont notamment utilisées dans la section aval des nacelles d'aéronefs équipées d'inverseurs de poussée, et plus particulièrement, pour provoquer l'inclinaison d'un panneau mobile à partir d'un déplacement sensiblement rectiligne du capot sur lequel il est fixé mobile en rotation. La demande française FR 08/04295 concerne un tel agencement avec une bielle droite reliant un panneau solidaire de la tuyère secondaire à la section fixe de carénage du turboréacteur.

Un tel système de bielle droite n'est pas toujours adapté à ces nacelles équipées d'inverseurs de poussée. La présence de telles bielles dans le flux secondaire perturbe considérablement l'aérodynamisme et réduit les performances du moteur. Aussi, pour ne pas perturber l'aérodynamisme, il est connu de fixer la bielle d'avantage en amont sur la structure interne fixe. Cependant, un tel positionnement en amont des bielles droites est souvent inadapté pour permettre un déplacement du capot qui découvre suffisamment les moyens de déviation, et ce faisant, assurer le positionnement essentiellement vertical, recherché, du panneau mobile en bout de course.

Pour satisfaire d'une part à l'aérodynamisme et donc à la présence d'un corps de bielle positionné plus en amont, et garder le point de pivot de la bielle sur la structure interne fixe situé d'avantage en aval, on peut avoir recours à une bielle coudée telle qu'illustrée dans le brevet US4533098.

Toutefois, avec une telle bielle coudée, au cours des déplacements du capot avec le panneau, la bielle est positionnée dans des conformations instables et non maîtrisées qui peuvent entraîner sa rupture ou la fragilisation de la structure environnante. Un tel phénomène est amplifié par le flux d'air secondaire dans la veine qui induit de fortes vibrations de la bielle sur ses points de pivot.

Pour rendre la bielle stable, une des possibilités est d'encastrer l'un des points de pivot de la bielle. A cet effet, on connait de la demande FR 08/06929 des bielles avec le point pivot du pied de bielle encastré dans la structure fixe de carénage du turboréacteur (ou structure interne fixe). Cependant, un tel agencement est très peu tolérant aux variations d'alignement des pièces, notamment s'agissant de l'alignement des points de pivots avec les points d'attaches dans lesquels ils sont prévus pour s'encastrer.

Afin de pallier les inconvénients précités la présente invention concerne, selon un premier aspect, une bielle coudée, destinée à relier un premier ensemble à un second ensemble mobiles l'un par rapport à l'autre et traversés par un flux dans l'espace qu'ils délimitent, munie d'au moins un premier et un second points pivots, conçus pour permettre le pivotement de la bielle respectivement par rapport audits premier et second ensembles, la bielle coudée étant adaptée pour être positionnée de manière que le coude se trouve en amont dudit flux par rapport audit second point pivot, ledit second point pivot étant adapté pour être encastré dans le second ensemble mobile, caractérisé en ce que la bielle coudée comprend au moins deux parties reliées entre elles par au moins un moyen d'auto-alignement.

Un tel agencement de bielle à plusieurs parties permet de réduire les contraintes sur les pièces, notamment au niveau des points pivot sur la structure interne fixe et sur la tuyère secondaire, étant donné que les chocs et vibrations sont absorbés par au moins un point de liaison réalisé à partir d'un moyen d'auto-alignement.

Le terme « moyen d'auto-alignement » au sens de la présente invention définit un point de fixation comprenant un élément conférant une certaine liberté de mouvement entre les pièces qu'il assemble, tel qu'un élément comportant au moins une rotule, dénommé « élément rotulé », ou tel qu'un ensemble élastique type bague « Paulstra™ ». Ainsi, les pièces reliées par ces points sont mobiles les unes par rapport aux autres. Le moyen d'auto-alignement peut, par exemple, présenter une structure essentiellement sphérique, mais également, présenter une configuration principalement allongée pour maintenir figés certains angles entre les pièces de la bielle, tel que pour garder l'angle du coude de la bielle constant ou pour bloquer l'alignement entre différentes parties d'organes.

Suivant d'autres caractéristiques optionnelles du dispositif de liaison selon la présente invention :
- la bielle coudée comprend une première et une seconde partie reliées entre elles par au moins un moyen d'auto-alignement, ladite première partie étant adaptée pour être reliée au premier ensemble par le premier point pivot et ladite seconde partie étant adaptée pour être reliée au second ensemble par le second point pivot : un tel assemblage à l'aide, par exemple, de rotules insérées directement dans les parties les plus susceptibles d'être sensibles aux contraintes, car reliés par des point pivots à la structure interne fixe et à la tuyère secondaire, garantie une flexibilité de la bielle coudée grâce à l'absorption des contraintes par les moyens d'auto-alignement ;
- de préférence, la seconde partie est encastrée dans la première partie et est maintenue solidaire avec ladite première partie par deux moyens d'auto-alignement : un tel agencement est simple à réaliser et est sûr, on peut faire appel à des éléments rotulés sphériques tel que ceux couramment utilisés dans le domaine de l'aéronautique ;
- l'une desdites parties est coudée ;
- de préférence, la partie adaptée pour être reliée au premier ensemble par le premier point pivot est coudé ;
- lesdits moyens d'auto-alignement sont positionnés entre le second point pivot et le coude de la bielle ;
- l'agencement desdites parties deux à deux est réalisé au travers d'au moins deux moyens d'auto-alignement éloignés le plus possible l'un de l'autre : un tel agencement permet d'obtenir un bras de levier maximum afin de réduire les efforts de torsion dans la structure des organes portant les moyens d'auto-alignement ;
- le premier point pivot traverse le profil du corps de la bielle sensiblement au milieu de la largeur dudit profil : on positionne ainsi une partie de la structure du corps de la bielle dans une zone de plus faible vitesse de flux secondaire, et on réduit ainsi l'impact sur les performances aérodynamiques de la bielle ;
- la bielle comprend un bouclier qui se prolonge en amont du corps de la bielle par un tablier : on obtient ainsi un lissage aérodynamique de la bielle, notamment au cours des phases initiales de déplacement d'un capot mobile ;
- le second point pivot comprend un moyeu : remplaçant la rotule couramment utilisée par un tel moyeu, dans le point pivot du pied de bielle fixé à la structure interne fixe, le moyeu permet d'améliorer la stabilité de la bielle dans toutes les phases de manoeuvre, l'homme du métier sait quelle largeur de moyeu choisir pour l'adapter à la morphologie de l'ensemble ;
- au moins un desdits moyens d'auto-alignement consiste en l'un quelconque des éléments sélectionnés parmi un élément rotulé et un ensemble élastique tel que les bagues du type Paulstra™.

Selon un deuxième aspect, la présente invention concerne une nacelle de turboréacteur double flux comprenant une section aval, équipée d'un dispositif d'inversion de poussée comprenant un capot mobile monté en translation selon une direction sensiblement parallèle à un axe longitudinal de la nacelle apte à passer alternativement d'une position de fermeture dans laquelle il assure la continuité aérodynamique de la nacelle et couvre des moyens de déviation, à une position d'ouverture dans laquelle il ouvre un passage dans la nacelle et découvre les moyens de déviation, ledit capot mobile étant également prolongé par au moins une section de tuyère montée à une extrémité aval dudit capot mobile, et comprenant au moins un panneau monté mobile en rotation autour d'au moins un pivot selon un axe sensiblement perpendiculaire à un axe longitudinal de la nacelle, remarquable en ce que ledit panneau est lié à une structure fixe de carénage du turboréacteur par au moins une bielle coudée telle que décrit précédemment, monté mobile en rotation autour des premier et second points pivots respectivement sur le panneau de la section de tuyère et sur la structure fixe.

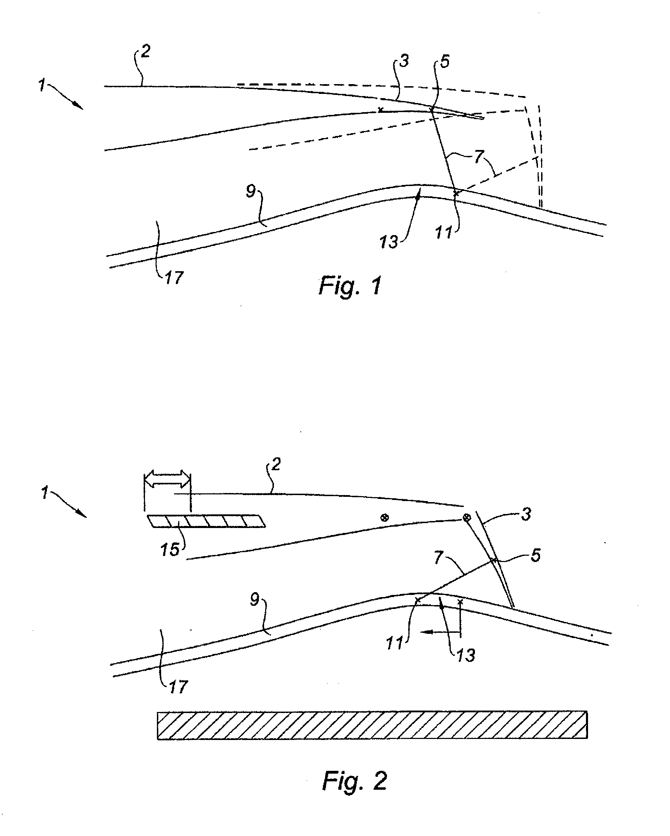

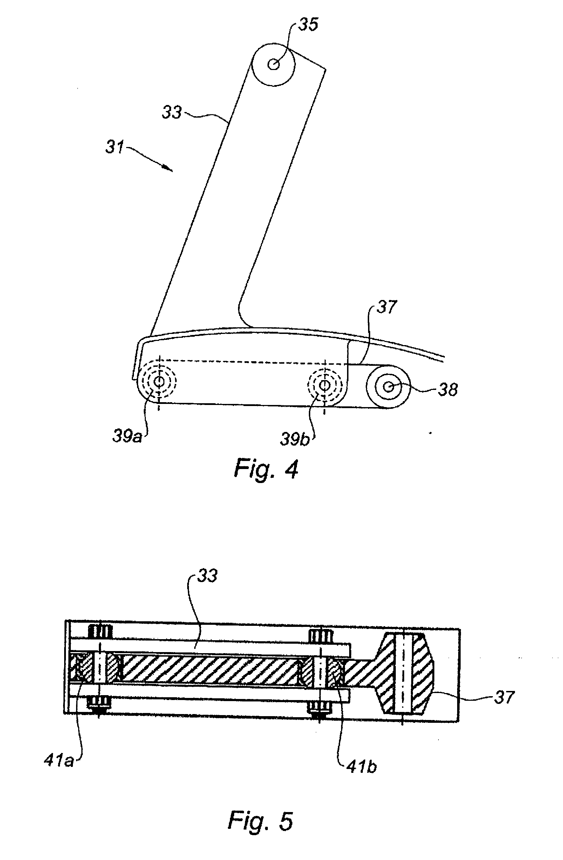

D'autres caractéristiques et avantages de la présente invention apparaîtront à la lumière de la description qui va suivre en référence aux figures annexées. Les figures 1 à 3b concernent des bielles de l'art antérieur, et les figures 4 à 10 illustrent des modes de réalisation avec des bielles selon la présente invention :
- la figure 1 représente une vue de détail, en coupe longitudinale, de la section aval d'une nacelle d'aéronef à inverseur de poussée avec une bielle droite de l'état de la technique reliant un panneau mobile de la tuyère secondaire à la structure fixe ;
- la figure 2 représente une vue de détail, en coupe longitudinale, de la section aval d'une nacelle d'aéronef à inverseur de poussée avec la même bielle droite de l'état de la technique, mais dont le point pivot du pied de bielle est avancé d'avantage en amont ;
- la figure 3a représente une vue de détail, en coupe longitudinale, de la section aval d'une nacelle d'aéronef à inverseur de poussée en position ouverte équipée d'une bielle coudée en une partie ;
- la figure 3b représente une vue schématique, en coupe transversale, d'une partie de section aval d'une nacelle d'aéronef à inverseur de poussée en position ouverte équipée de la bielle coudée représentée sur la figure 3a, avec les contraintes exercées sur le point pivot du panneau mobile de la tuyère secondaire ;
- la figure 4 représente une vue de profil d'une bielle coudée en deux parties selon l'invention équipée d'éléments rotulés ;
- la figure 5 représente une vue de dessous du pied de la bielle coudée de la figure 4 ;
- la figure 6a représente une vue en coupe transversale du pied d'une bielle selon l'invention sur une section qui porte un élément rotulé ;
- la figure 6b représente une vue en coupe transversale du pied d'une bielle selon l'invention sur une section qui porte une bague élastique du type Paulstra™ ;
- la figure 7a représente une vue de détail, en coupe longitudinale, de la section aval d'une nacelle d'aéronef à inverseur de poussée en position ouverte équipée d'une bielle coudée en deux parties selon l'invention ;
- la figure 7b représente une vue schématique, en coupe transversale, d'une partie de section aval d'une nacelle d'aéronef à inverseur de poussée en position ouverte équipée de la bielle coudée représentée sur la figure 7a, avec les écarts d'angle permis illustrés par des flèches sur le point pivot du panneau mobile de la tuyère ;
- la figure 8 représente une vue de détail, en coupe longitudinale, de la section aval d'une nacelle d'aéronef à inverseur de poussée en position fermée équipée d'une bielle coudée encastrée dans la structure fixe, et portant une partie du carénage du turboréacteur prolongé par un tablier ;
- la figure 9 représente la même vue que la figure 8, à ceci près que l'inverseur de poussée est légèrement ouvert et le tablier du pied de bielle se trouve dans le flux d'air secondaire ;
- la figure 10 représente une vue de profil, en coupe longitudinale, de la section aval d'une nacelle d'aéronef avec une bielle coudée en deux parties selon l'invention dont la partie haute est conçue pour être reliée au panneau mobile par un point pivot ; et dans laquelle, selon une première option, l'axe de ce point pivot est placé au deux tiers de la largeur du profil de la bielle (corps de bielle en traits pleins), ou bien, selon une autre option, l'axe est placé au milieu de la largeur du profil de la bielle (corps de bielle en pointillés).

Les termes « amont » et « aval » dans le présent contexte se définit par rapport au sens de circulation du flux d'air froid dans le passage annulaire. L'entrée d'air du turboréacteur est située le plus en amont du flux d'air froid circulant dans le passage annulaire, tandis que la sortie d'air est située le plus en aval du flux d'air froid circulant dans le passage annulaire. Sur les figures annexées qui représentent une section de nacelle, le flux d'air froid circule de la gauche vers la droite, ainsi l'entrée d'air est située vers la gauche et la sortie d'air vers la droite de ces figures.

Une tuyère secondaire 1 avec inverseur de poussée, telle que représentée sur la figure 1, présente un capot mobile 2 prolongé sur sa partie avale par un panneau mobile 3 qui pivote sur un axe sensiblement perpendiculaire à l'axe longitudinal de la nacelle sensiblement inscrit dans le plan de la figure 1. Une bielle droite 7 est montée, d'une part, sur le panneau mobile 3 par un premier point pivot 5 du et, d'autre part, à une structure fixe interne 9 par un second point pivot 11. Le point pivot 11 de pied de bielle 7 doit être positionné très en aval, de préférence en aval d'une partie convexe de carénage 13, pour permettre au capot mobile 2 de s'avancer suffisamment pour découvrir des moyens de déviation 15 (grilles) en entraînant une inclinaison du panneau mobile 3 de sorte qu'il se retrouve en fin de course tel qu'illustré en pointillé à droite de la figure 1.

Pour ne pas pénaliser les performances du moteur en perturbant notablement l'aérodynamisme du passage annulaire 17, le point pivot 11 du pied de bielle 7 doit être décalé le plus en amont possible, idéalement en amont de la partie convexe de carénage 13 (voir figure 2). Cependant, une telle configuration ne permet pas au capot mobile 2 de dégager les moyens de déviation 15 suffisamment, et le panneau 3 ne fait pas la course recherchée.

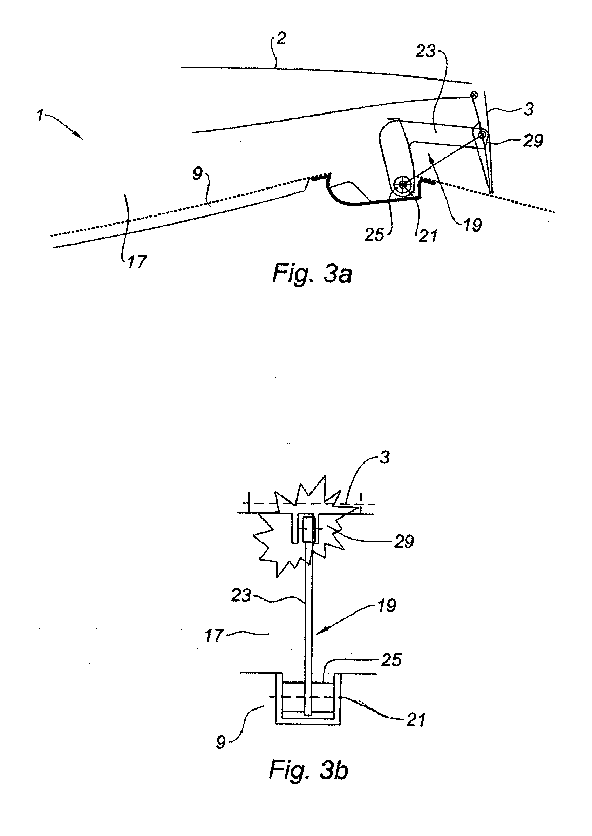

Pour parvenir au déplacement du capot 2 et du panneau 3, tout en ayant une position optimale de la bielle par rapport au flux secondaire on met en oeuvre une bielle coudée 19 dont le point pivot 21 sur la structure fixe 9 se trouve en aval du corps 23 de la bielle, lorsque le panneau mobile 3 est en position horizontale. Pour stabiliser la bielle, notamment en phase d'inversion de poussée lorsque le panneau mobile 3 est incliné en position sensiblement transversale par rapport au flux comme illustré sur la figure 3a, on utilise un moyeu 25 suffisamment large et encastré dans la structure fixe 9, pour stabiliser la bielle 19 durant toutes les phases de manoeuvre. Le point pivot 29 du corps 23 de la bielle est difficilement aligné avec le point d'attache prévu sur le panneau 3 (voir figure 3b), du fait des contraintes imposées en matière de tolérance de fabrication et de positionnement, dans le cas d'une bielle coudée 19 en une partie telle que représenté à la figure 3a.

La présente invention fournit une bielle en deux parties reliées entre-elles par des moyens de fixation convenablement choisis pour conférer une certaine souplesse à l'ensemble, permettant de faciliter l'alignement des différents points pivots de la bielle, en particulier durant toutes les phases de déplacements des pièces mobiles. Une telle bielle est représentée sur les figures 4 à 7b.

Une bielle coudée en deux parties 31 peut comporter idéalement un premier organe ou corps de bielle 33, destiné à être monté à un panneau mobile 3 de tuyère secondaire par le premier point pivot ou point pivot de corps 35 de bielle, dans lequel est encastré un second organe ou pied de bielle 37, destiné à être monté à la structure fixe 9 (voir figure 4) par le second point pivot ou point pivot de pied 38 de bielle. Les deux organes 33, 37 sont reliés ensemble par les moyens d'auto-alignement 39a et 39b, de sorte que le pied 37 et le corps 33 sont fixés l'un à l'autre tout en gardant une certaine liberté de déplacement l'un par rapport à l'autre. Les moyens d'auto-alignement 39a, 39b sont positionnés entre le point pivot de pied 38 de bielle et le coude 40. La distance entre les moyens d'auto-alignement 39a et 39b est choisie pour être la plus grande possible pour conférer un bras de levier maximum et réduire les efforts de torsion dans la bielle en deux parties 31.

Suivant un mode de réalisation particulier, les moyens d'auto-alignement 39a et 39 b sont des éléments rotulés 41 a et 41 b, tel que cela est représenté sur le pied de la bielle coudée 31 vue de dessous, de la figure 5.

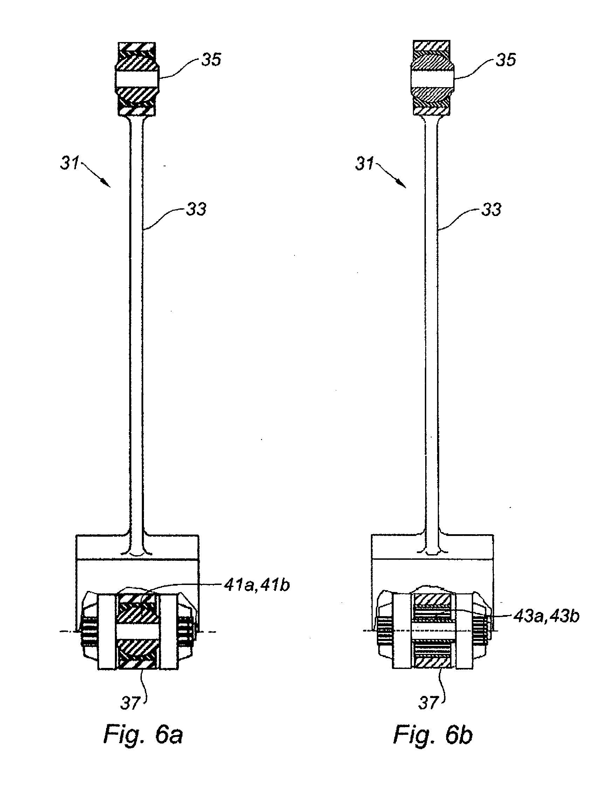

Les éléments rotulés 41 a et 41 b, du mode de réalisation illustré sur la figure 6a, peuvent être dans certains cas avantageusement remplacées par des ensembles élastiques tels que les bagues du type Paulstra™ 43a et 43b, comme illustré à la figure 6b. De telles bagues 43a et 43b ne requièrent pas d'entretien particulier. En effet, il n'est pas nécessaire de les lubrifier, vu qu'elles consistent essentiellement en un envirolage de différentes couches de caoutchouc et d'éléments métalliques.

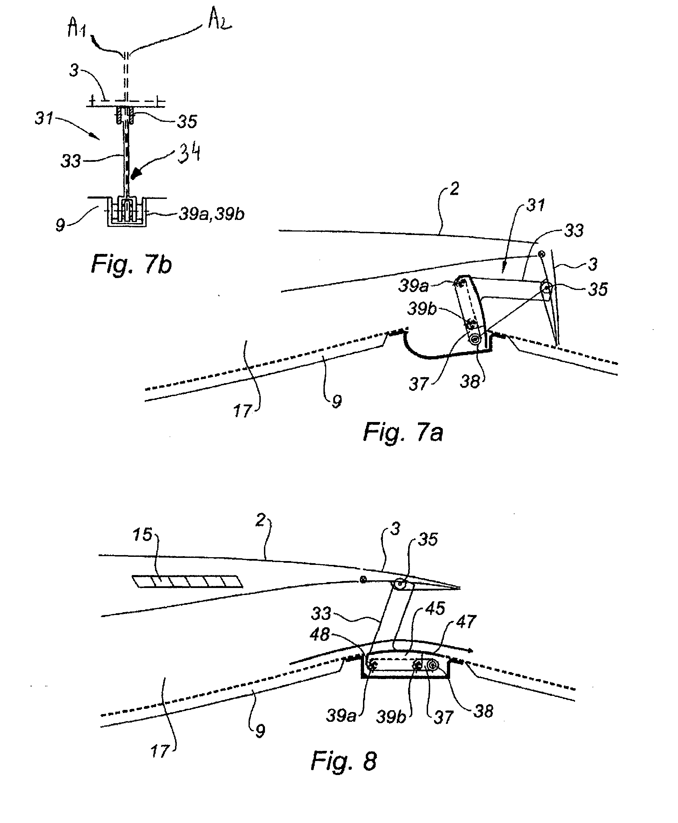

La figure 7b illustre l'écart d'angle permis sur le point pivot de corps 35 de bielle grâce à ce type de bielle coudée en deux parties 31 équipée de moyens d'auto-alignement 39a et 39b, notamment lorsque le panneau mobile 3 est complètement incliné comme illustré sur la figure 7a. Les axes A1 et A2 correspondent respectivement aux positionnements extrêmes du bord 34, représenté à droite sur la figure 7b du corps de bielle 33, autorisés par le débattement exercé par les moyens d'auto-alignement 39a et 39b,

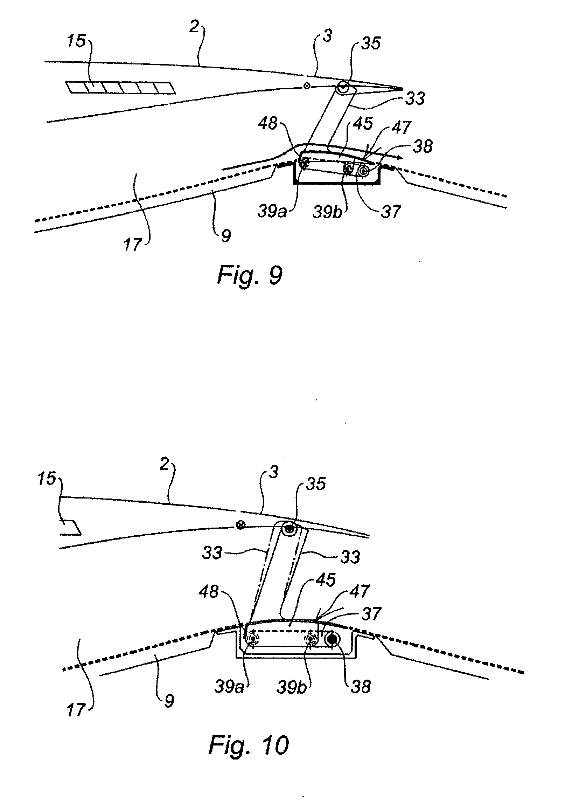

Un lissage aérodynamique peut être réalisé pour améliorer l'emboîtement dans la structure fixe 9 de la partie encastrée de la bielle en deux parties 31, par exemple, sur la partie 45 du corps de la bielle 33, dans laquelle est encastré le pied de bielle 37 (voir figure 8). On peut prévoir un bouclier 47, en continuité avec le carénage de la structure fixe 9, et muni d'un tablier 48 dans sa partie la plus en amont du flux secondaire. Un tel tablier 48 offre une rampe au flux qui minimise la perturbation aérodynamique lors du basculement de la bielle 31 vers l'arrière, comme on le voit sur la figure 9.

Pour améliorer encore les propriétés aérodynamiques de la bielle en deux parties 31 intégrées dans le passage annulaire 17, on profile le corps 33 de la bielle de manière que l'axe du point pivot de corps 35 de bielle traverse le profil du corps de la bielle en son milieu. La figure 10 montre, en traits pleins, une disposition classique avec un axe qui traverse le profil à un tiers de sa largeur en amont, ce qui est judicieux dans le cas des bielles droites pour éviter l'alignement du corps de la bielle avec l'entre axe des points pivots 35 et 38. Sur cette même figure 10, en pointillé, est représenté le profil d'une bielle 31 selon l'invention, avec l'axe au milieu du profil. Cette disposition permet, sans changer de cinématique, de ramener une partie de la structure du corps de bielle 33 dans une zone de plus faible vitesse du flux secondaire afin de réduire l'impact sur les performances aérodynamiques.

Bien entendu, la présente invention n'est nullement limitée aux modes de réalisation décrits et représentés, fournis à titre de simples exemples ; et notamment concernant la morphologie de l'encastrement des deux parties de la bielle coudée 31, il est bien sûr possible d'inverser la structure de l'interface avec propriété d'auto-alignement des deux organes 33 et 37, en réalisant la chape sur le pied de bielle 37 et le portage des moyens d'auto-alignement sur le corps de bielle 33.

## Revendications

1. Bielle coudée (31), destinée à relier un premier ensemble (3) à un second ensemble (9) mobiles l'un par rapport à l'autre et traversés par un flux dans l'espace qu'ils délimitent, munie d'au moins un premier et un second points pivots (35, 38), conçus pour permettre le pivotement de la bielle (31) respectivement par rapport auxdits premier (3) et second (9) ensembles, la bielle coudée (31) étant adaptée pour être positionnée de manière que le coude (40) se trouve en amont dudit flux par rapport audit second point pivot (38), ledit second point pivot (38) étant adapté pour être encastré dans le second ensemble mobile (9),
**caractérisée en ce qu'**elle comprend au moins deux parties (33, 37) reliées entre elles par au moins un moyen d'auto-alignement (39a, 39b).

2. Bielle coudée (31) selon la revendication 1, **caractérisé en ce qu'**elle comprend une première et une seconde partie (33, 37) reliées entre elles par au moins un moyen d'auto-alignement (39a, 39b), ladite première partie (33) étant adaptée pour être reliée au premier ensemble par le premier point pivot (35) et ladite seconde partie (37) étant adaptée pour être reliée au second ensemble par le second point pivot (38).

3. Bielle coudée (31) selon la revendication 2, **caractérisé en ce que** la seconde partie (37) est encastrée dans la première partie et est maintenue solidaire avec ladite première partie (33) par deux moyens d'auto-alignement (39a, 39b).

4. Bielle coudée (31) selon l'une des revendications précédentes, **caractérisé en ce que** l'une desdites parties (33, 37) est coudée.

5. Bielle coudée (31) selon la revendication 4 pris en combinaison avec l'une quelconque des revendications 2 ou 3, **caractérisé en ce que** la partie (33) adaptée pour être reliée au premier ensemble par le premier point pivot (35) est coudée.

6. Bielle coudée (31) selon l'une des revendications précédentes, **caractérisé en ce que** lesdits moyens d'auto-alignement (39a, 39b) sont positionnés entre le second point pivot (38) et le coude (40) de la bielle.

7. Bielle coudée (31) selon l'une quelconque des revendications précédentes, **caractérisé en ce que** l'agencement desdites parties (33, 37) deux à deux est réalisé au travers d'au moins deux moyens d'auto-alignement (39 a, 39b) éloignés le plus possible l'un de l'autre.

8. Bielle coudée (31) selon l'une quelconque des revendications précédentes, **caractérisé en ce que** le premier point pivot (35) traverse le profil du corps de la bielle (33) sensiblement au milieu de la largeur dudit profil.

9. Bielle coudée (31) selon l'une quelconque des revendications précédentes, **caractérisé en ce qu'**elle comprend un bouclier (47) qui se prolonge en amont du corps (33) de la bielle par un tablier (48).

10. Bielle coudée (31) selon l'une quelconque des revendications précédentes, **caractérisé en ce que** le second point pivot (38) comprend un moyeu (25).

11. Bielle coudée (31) selon l'une quelconque des revendications précédentes, **caractérisé en ce qu'**au moins un desdits moyens d'auto-alignement (39a, 39b) consiste en l'un quelconque des éléments sélectionnés parmi un élément rotulé (41 a, 41 b) et un ensemble élastique (43a, 43b) tel que les bagues du type Paulstra™.

12. Nacelle de turboréacteur double flux comprenant une section aval, équipée d'un dispositif d'inversion de poussée comprenant un capot mobile (2) monté en translation selon une direction sensiblement parallèle à un axe longitudinal de la nacelle apte à passer alternativement d'une position de fermeture dans laquelle il assure la continuité aérodynamique de la nacelle et couvre des moyens de déviation (15), à une position d'ouverture dans laquelle il ouvre un passage dans la nacelle et découvre les moyens de déviation (15), ledit capot mobile (2) étant également prolongé par au moins une section de tuyère montée à une extrémité aval dudit capot mobile (12), et comprenant au moins un panneau (3) monté mobile en rotation autour d'au moins un pivot selon un axe sensiblement perpendiculaire à un axe longitudinal de la nacelle, **caractérisée en ce que** ledit panneau (3) est lié à une structure fixe (9) de carénage du turboréacteur par au moins une bielle coudée (31) selon l'une quelconque des revendications 1 à 11, monté mobile en rotation autour des premier et second points pivots (35, 38) respectivement sur le panneau (3) de la section de tuyère et sur la structure fixe (9).

## Patentansprüche

1. Gebogene Verbindungsstange (31), die ausgelegt ist, um eine erste Einheit (3) mit einer zweiten Einheit (9) beweglich relativ zueinander und gequert von einem Fluss im Raum, den sie begrenzen, zu verbinden, ausgestattet mit mindestens einem ersten und einem zweiten Drehpunkt (35, 38), die entworfen sind, um die Drehung der Verbindungsstange (31) mit Bezug auf die erste (3) bzw. die zweite (9) Einheit zu ermöglichen, wobei die gebogene Verbindungsstange (31) ausgelegt ist, um derart positioniert zu werden, dass sich die Biegung (40) vorgelagert von dem Fluss mit Bezug auf den zweiten Drehpunkt (38) befindet, wobei der zweite Drehpunkt (38) ausgelegt ist, um in der zweiten beweglichen Einheit (9) eingebettet zu sein,
**dadurch gekennzeichnet, dass** sie mindestens zwei Teile (33, 37) umfasst, die untereinander durch mindestens ein Selbstausrichtungsmittel (39a, 39b) verbunden sind.

2. Gebogene Verbindungsstange (31) nach Anspruch 1, **dadurch gekennzeichnet, dass** sie einen ersten und einen zweiten Teil (33, 37) umfasst, die untereinander durch mindestens ein Selbstausrichtungsmittel (39a, 39b) verbunden sind, wobei der erste Teil (33) ausgelegt ist, um mit der ersten Einheit durch den ersten Drehpunkt (35) verbunden zu sein, und wobei der zweite Teil (37) ausgelegt ist, um mit der zweiten Einheit durch den zweiten Drehpunkt (38) verbunden zu sein.

3. Gebogene Verbindungsstange (31) nach Anspruch 2, **dadurch gekennzeichnet, dass** der zweite Teil (37) in den ersten Teil eingebettet ist, und mit dem ersten Teil (33) durch zwei Selbstausrichtungsmittel (39a, 39b) fest verbunden gehalten wird.

4. Gebogene Verbindungsstange (31) nach einem der vorhergehenden Ansprüche, **dadurch gekennzeichnet, dass** einer der Teile (33, 37) gebogen ist.

5. Gebogene Verbindungsstange (31) nach Anspruch 4, genommen in Kombination mit einem der Ansprüche 2 oder 3, **dadurch gekennzeichnet, dass** der Teil (33), der ausgelegt ist, um mit der ersten Einheit durch den ersten Drehpunkt (35) verbunden zu sein, gebogen ist.

6. Gebogene Verbindungsstange (31) nach einem der vorhergehenden Ansprüche, **dadurch gekennzeichnet, dass** die Selbstausrichtungsmittel (39a, 39b) zwischen dem zweiten Drehpunkt (38) und der Biegung (40) der Verbindungsstange positioniert sind.

7. Gebogene Verbindungsstange (31) nach einem der vorhergehenden Ansprüche, **dadurch gekennzeichnet, dass** die paarweise Anordnung der Teile (33, 37) mit Hilfe von mindestens zwei Mittel Selbstausrichtungsmitteln (39a, 39b) durchgeführt wird, die so weit wie möglich voneinander entfernt sind.

8. Gebogene Verbindungsstange (31) nach einem der vorhergehenden Ansprüche, **dadurch gekennzeichnet, dass** der erste Drehpunkt (35) das Profil des Körpers der Verbindungsstange (33) im Wesentlichen in der Mitte der Länge des Profils quert.

9. Gebogene Verbindungsstange (31) nach einem der vorhergehenden Ansprüche, **dadurch gekennzeichnet, dass** sie ein Schild (47) umfasst, das sich vorgelagert vom Körper (33) der Verbindungsstange durch ein Blech (48) verlängert.

10. Gebogene Verbindungsstange (31) nach einem der vorhergehenden Ansprüche, **dadurch gekennzeichnet, dass** der zweite Drehpunkt (38) eine Nabe (25) umfasst.

11. Gebogene Verbindungsstange (31) nach einem der vorhergehenden Ansprüche, **dadurch gekennzeichnet, dass** mindestens eines der Selbstausrichtungsmittel (39a, 39b) aus einem der Elemente besteht, ausgewählt aus einem Kugelelement (41 a, 41 b) und einem elastischen Element (43a, 43b) wie z.B. den Ringen vom Typ Paulstra^{™}.

12. Turbostrahl-Triebwerksgondel mit einer doppelten Strömung, umfassend einen nachgelagerten Schnitt, der mit einer Schubumkehrvorrichtung ausgestattet ist, umfassend eine mobile Haube (2), die in Translation gemäss einer Richtung montiert ist, die im Wesentlichen parallel zu einer Längsachse der Gondel ist, die ausgelegt ist, um sich alternativ von einer Verschlussposition, in der sie die aerodynamische Güte der Gondel sicherstellt und Ableitungsmittel (15) abdeckt, in eine Öffnungsposition zu bewegen, in der sie einen Durchgang in der Gondel öffnet, und die Ableitungsmittel (15) aufdeckt, wobei die bewegliche Haube (2) auch von mindestens einem Düsenabschnitt verlängert ist, der an ein nachgelagertes Ende der beweglichen Haube (12) montiert ist, und umfassend mindestens eine Platte (3), die drehbar beweglich um mindestens einen Drehpunkt gemäss einer Achse montiert ist, die im Wesentlichen senkrecht zu einer Längsachse der Gondel ist, **dadurch gekennzeichnet, dass** die Platte (3) mit einer festen Struktur (9) der Stromlinienverkleidung des Turbostrahl-Triebwerks durch mindestens eine gebogene Verbindungsstange (31) nach einem der Ansprüche 1 bis 11 verbunden ist, die drehbar mobil um erste bzw. zweite Drehpunkte (35, 38) auf der Platte (3) des Düsenabschnitts und auf der festen Struktur (9) montiert ist.

## Claims

1. A bent connecting rod (31), intended to connect a first assembly (3) to a second assembly (9) moveable with respect to each other and crossed by a flow in the space they delimit, provided with at least a first and a second pivot point (35, 38), designed to allow the pivoting of the connecting rod (31) respectively with respect to said first (3) and second (9) assemblies, the bent connecting rod (31) being suitable for being positioned in such a manner that the bend (40) is upstream of said flow with respect to said second pivot point (38), said second pivot point (38) being suitable for being recess-fitted in the second moveable assembly (9),
**characterized in that** it comprises at least two parts (33, 37) connected together by at least one self-alignment means (39a, 39b).

2. The bent connecting rod (31) according to claim 1, **characterized in that** it comprises a first and second part (33, 37) connected together by at least one self-alignment means (39a, 39b), said first part (33) being suitable for being connected to the first assembly by the first pivot point (35) and said second part (37) being suitable for being connected to the second assembly by the second pivot point (38).

3. The bent connecting rod (31) according to claim 2, **characterized in that** the second part (37) is recess-fitted in the first part and is maintained integral with said first part (33) by two self-alignment means (39a, 39b).

4. The bent connecting rod (31) according to any of the preceding claims, **characterized in that** any of said parts (33, 37) is bent.

5. The bent connecting rod (31) according to claim 4 taken in combination with any one of claims 2 or 3, **characterized in that** the part (33) suitable to be connected to the first assembly by the first pivot point (35) is bent.

6. The bent connecting rod (31) according to any of the preceding claims, **characterized in that** said self-alignment means (39a, 39b) are positioned between the second pivot point (38) and the bend (40) of the connecting rod.

7. The bent connecting rod (31) according to any one of the preceding claims, **characterized in that** the arrangement of said parts (33, 37) two by two is achieved through at least two self-alignment means (39a, 39b) spaced apart as much as possible from each other.

8. The bent connecting rod (31) according to any one of the preceding claims, **characterized in that** the first pivot point (35) crosses the profile of the body of the connecting rod (33) substantially in the middle of the width of said profile.

9. The bent connecting rod (31) according to any one of the preceding claims, **characterized in that** it comprises a shield (47) which extends upstream of the body (33) of the connecting rod by an apron (48).

10. The bent connecting rod (31) according to any one of the preceding claims, **characterized in that** the second pivot point (38) comprises a hub (25).

11. The bent connecting rod (31) according to any one of the preceding claims, **characterized in that** at least one of said self-alignment means (39a, 39b) consists in any one of the elements selected from among a ball joint element (41 a, 41 b) and an elastic assembly (43a, 43b) such as the Paulstra^{™} type rings.

12. A nacelle of dual flow turbojet engine comprising a downstream section, equipped with a thrust reversal device comprising a mobile cowl (2) mounted in translation along a direction substantially parallel with a longitudinal axis of the nacelle capable of alternatively switching from a closing position in which it ensures the aerodynamic continuity of the nacelle and covers diverting means (15), to an opening position in which it opens a passage in the nacelle and uncovers the diverting means (15), said mobile cowl (2) also being extended by at least one nozzle section mounted at a downstream end of said mobile cowl (12), and comprising at least one panel (3) mounted moveable in rotation around at least one pivot according to an axis substantially perpendicular to a longitudinal axis of the nacelle, **characterized in that** said panel (3) is linked to a stationary structure (9) of fairing of the turbojet engine by at least one bent connecting rod (31) according to any one of claims 1 to 11, mounted moveable in rotation around first and second pivot points (35, 38) respectively on the panel (3) of the nozzle section and on the stationary structure (9).
